# FASCICULE DE BREVET EUROPEEN

(11) **EP 0 461 998 B1**
(45) Date de publication et mention de la délivrance du brevet: **22.03.1995**
(21) Numéro de dépôt: 91401554.0
(22) Date de dépôt: 12.06.1991
(51) Int. Cl.: A21C 9/06, A23L 1/16

(54) **Procédé de fabrication de triangle de pâte farcie**
Verfahren zur Herstellung von gefüllten dreieckigen Teigstücken
Method of producing a stuffed pastry triangle

(30) Priorité: 12.06.1990 FR 9007258
(43) Date de publication de la demande: 18.12.1991
(73) Titulaire: Poulain, Edgard, F-78480 Verneuil sur Seine (FR)
(72) Inventeur: Poulain, Edgard, F-78480 Verneuil sur Seine (FR)
(74) Mandataire: Rinuy, Santarelli

(56) Documents cités:
- US-A- 4 439 124

## Description

La présente invention concerne un procédé de fabrication de triangles de pâte farcie.

Les triangles de pâte farcie doivent d'une part avoir une bonne tenue à la friture pour que la farce ne s'en échappe pas et d'autre part présenter un aspect croustillant.

Cette première caractéristique est obtenue en pliant manuellement une bande de pâte alimentaire de façon à fermer les trois côtés d'un triangle ayant reçu la farce pour retenir cette dernière lors de la cuisson.

Et la seconde est obtenue en doublant l'épaisseur de la pâte sur chaque face du triangle farci, ce qui permet de conserver un aspect moëlleux, à la couche intérieure tout en donnant un aspect croustillant et rustique à la couche extérieure du produit.

Le procédé conventionnel de fabrication artisanale de tels triangles consiste à plier sous forme de triangles successifs une bande de pâte alimentaire ayant reçu un dépôt de farce jusqu'à obtention d'un triangle dont les deux faces triangulaires ont une double épaisseur de pâte.

Toutefois ce procédé pose des problèmes lorsqu'on passe d'une fabrication manuelle à une fabrication automatique sur machine industrielle.

La présente invention a pour objet un nouveau procédé de fabrication de triangle de pâte farcie à au moins double épaisseur de pâte sur chacune de ses faces et qui se prête particulièrement bien à une utilisation dans une machine de fabrication à grande cadence.

Le procédé selon l'invention est caractérisé en ce qu'on prépare tout d'abord un produit semi-fini par sertissage et découpe triangulaires de deux bandes de pâte alimentaires parallèles entre lesquelles est déposée la farce, on dépose ensuite ce produit semi-fini sur une surface triangulaire d'une ébauche prédécoupée de pâte alimentaire présentant au moins deux surfaces en forme de triangle ayant un côté commun, et on replie enfin cette ébauche autour du côté commun à ces deux surfaces pour constituer la deuxième épaisseur du triangle final de pâte farcie.

Un tel procédé, grâce en particulier à l'utilisation d'un triangle intermédiaire semi-fini n'ayant qu'une seule épaisseur de pâte sur chacune de ses faces, facilite les opérations de pliage dans une machine automatique.

L'invention va maintenant être décrite à l'aide d'une mise en oeuvre préférée, illustrée dans les dessins ci-joints, où :
- la figure 1 montre les deux bandes de pâte utilisées pour préparer le produit semi-fini du procédé selon l'invention ;
- la figure 2 montre le produit semi-fini obtenu par sertissage et découpe triangulaires des deux bandes de pâte de la figure 1 ;
- la figure 3 montre l'ébauche prédécoupée sur laquelle va être déposé le produit semi-fini de la figure 2 ;
- la figure 4 montre le produit semi-fini déposé sur une surface triangulaire de l'ébauche prédécoupée de la figure 3 ;
- les figures 5, 6 et 7 montrent les différentes phases de pliage de l'ébauche prédécoupée sur le produit semi-fini pour aboutir au produit final du procédé selon l'invention.

Selon l'invention, une pâte alimentaire est laminée à une épaisseur fine désirée sous forme de bandes prêtes à être découpées.

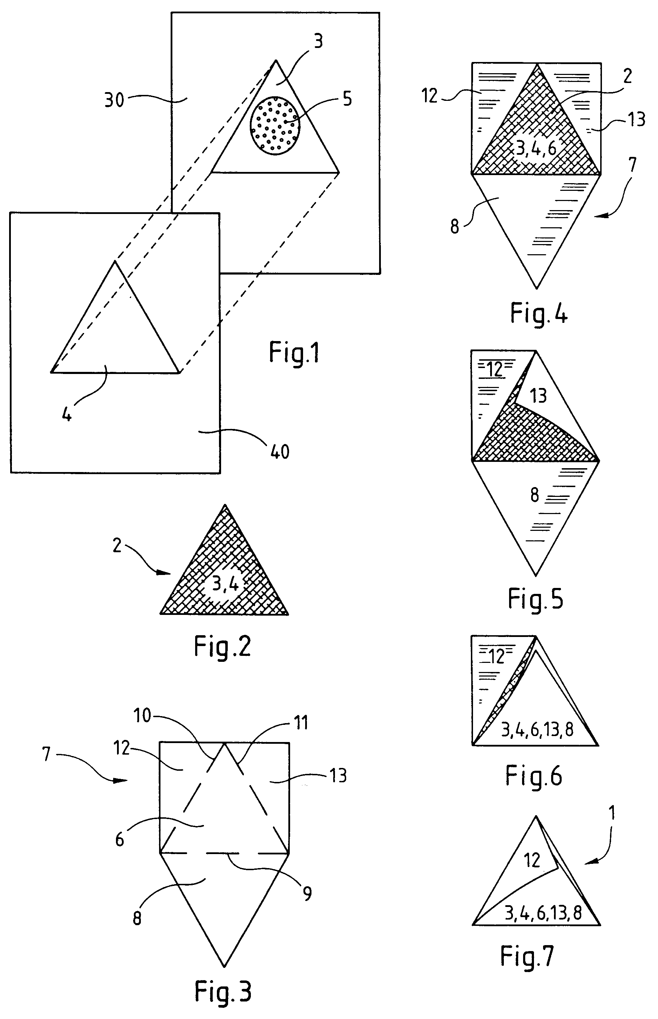

Comme le montre la figure 1, deux bandes de pâte (30 et 40) se déplacent en parallèle et on effectue un dépôt de farce (5) entre elles.

Après dépôt de la farce (5), les deux bandes de pâte (30 et 40) subissent un sertissage et une découpe triangulaires selon deux surfaces triangulaires respectivement (3 et 4), entre lesquelles est emprisonnée la farce (5).

Les surfaces (3) et (4) sont identiques et ont de préférence la forme de triangles équilatéraux.

On obtient ainsi un produit semi-fini (2) représenté sur la figure 2 qui est un triangle intermédiaire de pâte farcie ne comprenant qu'une seule épaisseur de pâte sur chacune de ses faces triangulaires (3 et 4).

On procède d'autre part, dans une bande de pâte alimentaire analogue aux bandes (30 et 40), à la découpe d'ébauches (7) ayant la forme représentée sur la figure 3.

L'ébauche prédécoupée (7) présente deux surfaces en forme de triangles (6 et 8), symétriques par rapport à un côté commun (9).

Les deux autres côtés (10 et 11) de l'un des triangles (6) de l'ébauche (7) sont communs respectivement avec les côtés de surfaces adjacentes en forme de triangles rectangles (12 et 13).

Comme on le voit sur la fig. 3, les côtés (10 et 11) de la surface (6) constituent les hypoténuses des triangles rectangles (12 et 13), dont la superficie est égale à la moitié de la surface triangulaire (6).

De préférence les triangles (6 et 8) de l'ébauche prédécoupée (7) sont des triangles équilatéraux comme les triangles (3 et 4) du produit semi-fini (2).

Le procédé selon l'invention comporte comme étape suivante le dépôt du produit semi-fini (2) sur la surface triangulaire (6) d'une ébauche prédécoupée (7).

Ce dépôt est effectué de façon que les formes triangulaires du produit semi-fini (2) coïncident avec celles de la surface (6) comme indiqué sur la figure 4, ou bien de façon que le triangle (3, 4) du produit semi-fini (2) forme avec le triangle de la surface (6) des triangles homothétiques ayant le même centre de gravité.

On enveloppe alors le produit intermédiaire (2) à une seule épaisseur de pâte en rabattant successivement les surfaces (13, 8 et 12) après les avoir enduites de colle au préalable, comme représenté par des hachures sur les figs. 4, 5 et 6.

Le pliage des surfaces (13, 8 et 12) le long des côtés (11, 9 et 10) de la surface triangulaire (6) est d'autant plus facile avec une machine automatique que le produit semi-fini (2), déposé sur la surface (6), guide la formation des plis correspondants.

On aboutit ainsi à un triangle final de pâte farcie présentant au moins une double épaisseur sur chacune de ses faces triangulaires.

## Revendications

1. Procédé de fabrication de triangle de pâte farcie (1) avec au moins une double épaisseur de pâte sur chacune de ses faces triangulaires caractérisé par la préparation d'un produit semi-fini (2) obtenu par sertissage et découpe triangulaires (3, 4), de deux bandes de pâte alimentaire (30, 40) parallèles entre lesquelles est déposée la farce (5), le dépôt de ce produit semi-fini (2) sur une surface triangulaire (6) d'une ébauche prédécoupée (7) de pâte alimentaire présentant au moins deux surfaces en forme de triangles (6 et 8) ayant un côté commun (9) et le pliage de cette ébauche autour du côté (9) commun à ces deux surfaces (6 et 8) pour constituer la deuxième épaisseur du triangle final de pâte farcie.

2. Procédé selon la revendication 1, caractérisé en ce que non seulement le côté commun (9) mais également les deux autres côtés (10 et 11) de la surface triangulaire (6) de l'ébauche prédécoupée (7), sur laquelle est déposée le produit semi-fini (2), sont communs avec les côtés de surfaces triangulaires adjacentes, respectivement (8, 12 et 13), de façon que ces trois surfaces triangulaires (8, 12 et 13) puissent être rabattues, le long de leur côté commun, sur le produit semi-fini (2).

3. Procédé selon la revendication 1 ou 2 caractérisé en ce que les surfaces triangulaires (3, 4) du produit semi-fini (2) et les surfaces en forme de triangles (6, 8) de l'ébauche (7) se présentent, de préférence, sous forme de triangles équilatéraux.

4. Procédé selon la revendication 2 ou 3 caractérisé en ce que les surfaces triangulaires (12 et 13) se présentent sous forme de triangles rectangles ayant chacune une superficie égale à la moitié de la surface triangulaire (6).

5. Procédé selon la revendication 3, caractérisé en ce que le dépôt du produit semi-fini (2) sur l'ébauche prédécoupée (7) s'effectue de façon que le triangle (3, 4) du produit semi-fini (2) forme avec le triangle de la surface (6) des triangles homothétiques de même centre de gravité.

## Claims

1. Method of manufacturing triangular filled pastry products (1) having at least two thicknesses of pastry on each triangular side characterized by the preparation of a semi-finished product (2) obtained by crimping and cutting into triangles (3, 4) two parallel strips of dough (30, 40) between which the filling (5) is placed, the placing of this semi-finished product (2) onto a triangular surface (6) of a precut dough blank (7) having at least two triangular surfaces (6 and 8) having a common side (9) and the folding of this blank about the side (9) common to these two surfaces (6 and 8) to constitute the second thickness of the finished triangular filled pastry product.

2. Method according to claim 1 characterized in that not only the common side (9) but also the other two sides (10 and 11) of the triangular surface (6) of the precut blank (7) onto which the semi-finished product (2) is placed are common with the respective sides (8, 12 and 13) of the adjacent triangular surfaces, whereby these three triangular surfaces (8, 12 and 13) can be folded along their common side onto the semi-finished product (2).

3. Method according to claim 1 or claim 2 characterized in that the triangular surfaces (3, 4) of the semi-finished product (2) and the triangular surfaces (6, 8) of the blank (7) are preferably in the form of equilateral triangles.

4. Method according to claim 2 or claim 3 characterized in that the triangular surfaces (12 and 13) are in the form of right-angle triangles each having a surface area equal to half that of the triangular surface (6).

5. Method according to claim 3 characterized in that the semi-finished product (2) is placed on the precut blank (7) so that the triangle (3, 4) of the semi-finished product (2) forms with the triangle of the surface (6) homothetic triangles with the same center of gravity.

## Patentansprüche

1. Verfahren zur Herstellung eines gefüllten dreieckigen Teigstücks (1) mit mindestens einer doppelten Teigdicke auf jeder seiner Dreieckseiten, gekennzeichnet durch die Herstellung eines Halbfertigproduktes (2), erhalten durch Dreieckfalzung und -schneiden (3,4) von zwei parallelen Speiseteigstreifen (30,40), zwischen die die Füllung (5) eingebracht wird, das Ablegen des Halbfertigproduktes (2) auf eine Dreieckfläche (6) eines vorgeschnittenen Vorproduktes (7) aus Speiseteig, der mindestens zwei Flächen in Dreieckform (6 und 8)mit einer gemeinsamen Seite (9) aufweist, und die Faltung dieses Vorproduktes um die den beiden Flächen (6 und 8) gemeinsame Seite (9), um die zweite Dicke des fertigen gefüllten Teigdreieckes zu bilden.

2. Verfahren nach Anspruch 1, dadurch gekennzeichnet, daß nicht nur die gemeinsame Seite (9) sondern auch die beiden anderen Seiten (10 und 11) der Dreieckfläche (6) des vorgeschnittenen Vorproduktes (7), auf das das Halbfertigprodukt (2) abgelegt wird, den Seiten der benachbarten Dreieckflächen (8, 12 und 13) in solcher Weise gemeinsam sind- daß diese drei Dreieckflächen (8, 12 und 13) entlang ihrer gemeinsamen Seite auf das Halbfertigprodukt (2) zurückgeschlagen werden können.

3. Verfahren nach Anspruch 1 oder 2, dadurch gekennzeichnet, daß die Dreieckflächen (3,4) des Halbfertigproduktes (2) und die in Dreieckform vorliegenden Flächen (6,8) des Vorproduktes (7) vorzugsweise in Form gleichseitiger Dreiecke vorliegen.

4. Verfahren nach Anspruch 2 oder 3, dadurch gekennzeichnet, daß die Dreieckflächen (12 und 13) in Form rechtwinkliger Dreiecke vorliegen, die jeweils eine Flächenausdehnung gleich der Hälfte der Dreieckfläche (6) haben.

5. Verfahren nach Anspruch 3, dadurch gekennzeichnet, daß die Ablage des Halbfertigproduktes (2) auf dem vorgeschnittenen Vorprodukt (7) in solcher Weise erfolgt. daß das Dreieck (3,4) des Halbfertigproduktes (2) mit dem Dreieck der Fläche (6) homothetische Dreiecke mit dem gleichen Schwerpunkt bildet.
